# EUROPÄISCHE PATENTANMELDUNG

(11) **EP 2 565 420 A2**
(43) Veröffentlichungstag der Anmeldung: **06.03.2013**
(21) Anmeldenummer: 12181534.4
(22) Anmeldetag: 23.08.2012
(51) Int. Cl.: F02C 7/32

(54) **Hilfsgerätegetriebeeinrichtung für ein Triebwerk**

(30) Priorität: 02.09.2011 DE 102011112250
(71) Anmelder: Rolls-Royce Deutschland Ltd & Co KG, 15827 Blankenfelde-Mahlow (DE)
(72) Erfinder: Beier, Jürgen, 15732 Schulzendorf (DE)
(74) Vertreter: Kronthaler, Wolfgang N.K.

(57) **Zusammenfassung**

Es wird eine Hilfsgerätegetriebeeinrichtung (9) für ein Triebwerk (1) mit wenigstens einer mit einem Hilfsaggregat verbindbaren und von einer Antriebswelle (13) antreibbaren Hilfsgerätegetriebewelle vorgeschlagen, wobei die Antriebswelle (13) mit einer Triebwerkswelle (14) des Triebwerks (1) in Wirkverbindung bringbar ist. Wenigstens ein Hilfsaggregat (36) ist auf der Antriebswelle (13) und/oder im Bereich der Wirkverbindung zwischen der Antriebswelle (13) und der Triebwerkswelle (14) und/oder auf einer mit einem weiteren Hilfsaggregat verbindbaren Hilfsgerätegetriebewelle anordenbar.

## Beschreibung

Die Erfindung betrifft eine Hilfsgerätegetriebeeinrichtung für ein Triebwerk gemäß der im Oberbegriff des Patentanspruches 1 näher definierten Art.

Hilfsgerätegetriebeeinrichtungen für Triebwerke mit mehreren Hilfsgerätegetriebewellen, die jeweils mit einem Hilfsaggregat, wie beispielsweise einer Brennstoffpumpe, einem Generator oder dergleichen, verbindbar sind, sind aus der Praxis hinlänglich bekannt. Die Hilfsgerätegetriebewellen sind im Wesentlichen achsparallel zueinander angeordnet und an den zur Verfügung stehenden Bauraum im Triebwerk angepasst. Dabei sind sie im Wesentlichen in Umfangsrichtung des Triebwerkes verteilt nebeneinander positioniert und werden über Stirnradstufen von einer mit der Triebwerkswelle wirkverbundenen Antriebswelle der Hilfsgerätegetriebeeinrichtung angetrieben.

Als unabhängige Stromquelle für eine Stromversorgung einer Triebwerksregelung werden über die Hilfsgerätegetriebeeinrichtungen derartige Generatoren, beispielsweise so genannte Permanent Magnet Alternators (PMAs), angetrieben. Die Generatoren sind mit einer parallel zur Antriebswelle verlaufenden Hilfsgerätegetriebewelle verbindbar und auf dieser anordenbar sowie über diese im Betrieb des Triebwerks mit einer Drehzahl im Hochgeschwindigkeitsbereich von etwa 10.000 bis 24.000 Umdrehungen pro Minute antreibbar. Weiterhin sind über die Hilfsgerätegetriebeeinrichtungen neben PMAs auch im Vergleich zu PMAs größer dimensionierte Generatoren antreibbar, die zur Stromversorgung des gesamten Flugzeugs ausgebildet sind.

Die Generatoren sind jeweils auf einer separaten Hilfsgerätegetriebewelle der Hilfsgerätegetriebeeinrichtung angeordnet und beispielsweise über Bolzenverbindungen mit einem Gehäuse der Hilfsgerätegetriebeeinrichtungen verbindbar.

Die bekannten Hilfsgerätegetriebeeinrichtungen benötigen nachteilhafterweise einen großen Bauraum und sind durch ein hohes Gesamtgewicht gekennzeichnet.

Der vorliegenden Erfindung liegt daher die Aufgabe zugrunde, eine bauraumgünstige und ein geringes Gesamtgewicht aufweisende Hilfsgerätegetriebeeinrichtung für ein Triebwerk zur Verfügung zu stellen.

Erfindungsgemäß wird diese Aufgabe mit einer Hilfsgerätegetriebeeinrichtung mit den Merkmalen des Patentanspruches 1 gelöst.

Bei einer erfindungsgemäß ausgebildeten Hilfsgerätegetriebeeinrichtung für ein Triebwerk mit wenigstens einer mit einem Hilfsaggregat verbindbaren und von einer Antriebswelle antreibbaren Hilfsgerätegetriebewelle ist die Antriebswelle mit einer Triebwerkswelle des Triebwerks in Wirkverbindung bringbar. Erfindungsgemäß ist vorgesehen, dass wenigstens ein Hilfsaggregat auf der Antriebswelle und/oder im Bereich der Wirkverbindung zwischen der Antriebswelle und der Triebwerkswelle und/oder auf einer mit einem weiteren Hilfsaggregat verbindbaren Hilfsgerätegetriebewelle anordenbar ist.

Die erfindungsgemäße Hilfsgerätegetriebeeinrichtung hat den Vorteil, dass zur Anordnung des wenigstens einen Hilfsaggregats keine separate Hilfsgerätegetriebewelle vorgesehen werden muss, sondern das wenigstens eine Hilfsaggregat auf einer bereits vorhandenen Welle der Hilfsgerätegetriebeeinrichtung anordenbar ist. Hierdurch wird Bauraum und Gewicht eingespart, da die bei bekannten Hilfsgerätegetriebeeinrichtungen für das wenigstens eine Hilfsaggregat vorgesehene Hilfsgerätegetriebewelle entfallen kann. Die erfindungsgemäße Lösung ist somit kostengünstig umsetzbar. Durch den Wegfall der separaten Hilfsgerätegetriebewelle für das wenigstens eine Hilfsaggregat wird auch eine Länge der Hilfsgerätegetriebeeinrichtung in Umfangsrichtung des Triebwerks reduziert, wodurch wiederum eine Komplexität von Öl- und Luftleitungen zur Versorgung der Hilfsaggregate der nunmehr verkürzten Hilfsgerätegetriebeeinrichtung reduziert ist.

Bei der erfindungsgemäßen Hilfsgerätegetriebeeinrichtung kann ein Hilfsaggregat auf einer der beschriebenen Wellen angeordnet sein. Es können auch mehrere Hilfsaggregate vorgesehen sein, welche entweder gemeinsam auf einer der beschriebenen Wellen oder auf verschiedenen der beschriebenen Wellen angeordnet sind.

Bei einer vorteilhaften Weiterbildung der erfindungsgemäßen Hilfsgerätegetriebeeinrichtung ist das wenigstens eine Hilfsaggregat vorzugsweise als Generator ausgeführt und zumindest teilweise lösbar auf der Antriebswelle, im Bereich der Wirkverbindung zwischen der Antriebswelle und der Triebwerkswelle oder der Hilfsgerätegetriebewelle anordenbar, so dass die Teile des Hilfsaggregats im Schadensfall innerhalb kurzer Zeit ersetzt oder gewartet werden können.

Um eine Austauschbarkeit zumindest der wartungsintensiveren Bauteile des Hilfsaggregats auf einfache und schnelle Weise zu ermöglichen, können wenigstens ein Stator und ein Gehäuse des vorzugsweise als Generator ausgeführten Hilfsaggregates lösbar auf der Antriebswelle, im Bereich der Wirkverbindung zwischen der Antriebswelle und der Triebwerkswelle oder Hilfsgerätegetriebewelle angeordnet und ein Rotor fest mit einer Welle verbunden sein. Der Rotor, welcher im Gegensatz zu dem Stator des Generators nicht sehr fehleranfällig ist, kann bei einem Austausch des Stators und des Gehäuses des Generators mit der Welle verbunden bleiben.

Bei einer vorteilhaften Ausführung der Hilfsgerätegetriebeeinrichtung ist der Rotor über eine insbesondere als Nut-Federverbindung ausgebildete Festlegungseinrichtung mit der Welle drehfest verbindbar.

Von einer Welle lösbare Bauteile des Generators sind bei einer konstruktiv einfachen Ausführung der Erfindung in Umfangsrichtung wenigstens zweiteilig bzw. zweischalig ausgebildet. Zusätzlich ist es auch möglich, dass der Rotor ebenfalls in vergleichbarer Weise wie der Stator und das Gehäuse zweigeteilt ausgebildet ist und mitsamt dem Stator und dem Gehäuse von der Welle lösbar ist.

Die lösbaren Bauteile des Generators sind bei einer konstruktiv einfachen Ausführung der Erfindung einerseits mit einer Gelenkverbindung miteinander schwenkbar gekoppelt und andererseits über eine Verschlusseinrichtung zur Festlegung auf einer Welle der Hilfsgerätegetriebeeinrichtung miteinander verbindbar und manschettenartig an der Welle festlegbar. Ein Austausch der Teile des Generators mittels einer derartigen Scharnier-Verschluss-Verbindung ist besonders einfach möglich.

Alternativ oder zusätzlich hierzu können insbesondere die lösbaren Bauteile des Generators mittels wenigstens einer das Gehäuse des Generators umfangsseitig umfassenden Befestigungseinrichtung auf der Welle angeordnet werden. Die Befestigungseinrichtung kann insbesondere einen Schnellverschluss darstellen und beispielsweise als so genannte V-Band-Schelle ausgebildet sein. Die austauschbaren Teile des Generators können hierdurch völlig getrennt voneinander sein.

Um den Generator sicher auf der Welle festzulegen, kann die Befestigungseinrichtung zum Zusammenwirken mit einem in axialer Richtung seitlichen Bereich des Gehäuses des Generators und einem an diesen Bereich des Gehäuses angrenzenden Bereich eines benachbarten Gehäuses ausgeführt sein, so dass der Generator insbesondere auch in axialer Richtung gegenüber dem im Einbauzustand benachbarten Gehäuse gesichert ist.

Der Generator kann zur Anordnung im Bereich eines Endabschnitts der Welle ausgebildet sein, wobei der Endabschnitt der Welle von dem Gehäuse des Generators vollständig eingeschlossen ist. In einer hierzu alternativen Ausführung der Erfindung ist der Generator zur Anordnung auf einer im Bereich des Generators durchgängigen Welle der Hilfsgerätegetriebeeinrichtung des Triebwerks ausgebildet, wobei ein Gehäuse des Generators insbesondere mit Gehäusen von benachbarten Bauteilen zusammenwirkt.

Um im Betrieb des Generators insbesondere im Bereich des Stators entstehende Wärmeenergie von dem Generator abzuführen, ist die Welle, auf der der Generator anordenbar ist, bei einer vorteilhaften Ausführung der erfindungsgemäßen Hilfsgerätegetriebeeinrichtung als Hohlwelle ausgebildet und eine Kühleinrichtung mit einem Kühlmittel vorgesehen, welches zur Kühlung des Generators durch die Welle führbar ist.

Eine Abführung von sehr großen, im Bereich des Generators entstehenden Wärmemengen, beispielsweise bei großen Generatoren, welche zur Stromversorgung eines gesamten Flugzeugs vorgesehen sind, kann bei einer vorteilhaften Ausführung der Erfindung mit einem ein separates Kühlsystem aufweisenden Generator geschaffen werden, welches insbesondere im Bereich des Stators verlaufende Kühlleitungen aufweist.

Bei einer besonders vorteilhaften Ausführung der erfindungsgemäßen Hilfsgerätegetriebeeinrichtung ist ein wenigstens einen Stator aufweisender Statorbereich des Generators gegenüber einem wenigstens einen Rotor aufweisenden Rotorbereich des Generators getrennt. Hierdurch kann auf konstruktiv einfache Art und Weise eine weiter verbesserte und besonders effektive Kühlung des Generators sichergestellt werden, da das Kühlmedium nahe an den Stator gelangen kann, in dessen Bereich ein Großteil der Wärme in einem Betriebszustand des Generators entsteht.

Eine vollständige Abdichtung des einen Trockenraum darstellenden Statorbereichs gegenüber dem einen Nassbereich darstellenden Rotorbereich ist mit einfachen Mitteln möglich, wohingegen bei Generatoren mit einer Kühlung im Bereich einer Hohlwelle durch die zur Abtrennung des Trockenraums vorgesehenen Ölabscheider geringe Mengen an Öl in einen Bereich des Stators eintreten können. Durch die erfindungsgemäße Separierung des Rotorbereichs von dem Statorbereich bzw. die Kapselung des Statorbereichs wird vorteilhafterweise sichergestellt, dass das Kühlmedium nicht in Kontakt mit elektrischen Komponenten des Statorbereichs tritt. Da der Rotor im Betriebszustand des Generators von dem Kühlmedium umspült wird, kann er bei der Wahl eines entsprechenden Kühlmediums durch das Kühlmedium zusätzlich vor Korrosion geschützt werden. Die Kühlung des Generators kann dabei über eine dem Generator zugeordnete Kühleinrichtung durchgeführt werden. Die Kühleinrichtung kann auch an ein weiteres Kühlsystem der Hilfsgerätegetriebeeinrichtung oder des gesamten Triebwerks angeschlossen sein, so dass die Kühleinrichtung des Generators beispielsweise keinen separaten Tank und/oder keine separate Pumpe aufweisen muss.

Bei einer konstruktiv einfachen Weiterbildung der Erfindung ist zur Trennung des Statorbereichs von dem Rotorbereich ein zwischen Stator und Rotor verlaufendes Trennelement vorgesehen. Da das Trennelement kein Strukturbauteil darstellt und dementsprechend keine tragende Funktion zu erfüllen hat, kann es sehr dünn ausgebildet werden. Ein Abstand zwischen dem Stator und dem Rotor, welcher für die Effektivität des Generators eine entscheidende Rolle spielt, kann somit sehr klein gehalten werden. Eventuelle Verluste durch den durch das Trennelement geringfügig vergrößerten Abstand zwischen dem Rotor und dem Stator des Generators können gegebenenfalls durch eine geringe Erhöhung einer Magnetfeldstärke im Vergleich zu einem herkömmlichen Generator ohne Trennelement auf einfache Weise ausgeglichen werden.

Um einen Einfluss des Trennelements auf einen Wirkungsgrad des Generators so gering wie möglich zu halten, besteht das Trennelement bei einer vorteilhaften Ausführung der Erfindung aus einem nicht-magnetischen Material.

Das Trennelement ist bei einer konstruktiv einfachen Ausführung der Erfindung als separates Bauteil ausgebildet, welches über Befestigungselemente mit einem Gehäuse, insbesondere einem Statorgehäuse des Generators verbindbar ist. Ein Material des Trennelements kann bei dieser Ausführung vorteilhafterweise unabhängig von einem Material des Gehäuses gewählt werden. Das Trennelement kann beispielsweise über Bolzen, Schrauben oder ähnliches an dem Gehäuse festgelegt werden. Bei einer hierzu alternativen Ausführung der Erfindung ist das Trennelement integral mit einem Gehäuse des Generators gebildet.

Der Generator kann beispielsweise zur Stromversorgung einer Triebwerksregelung oder zur Stromversorgung eines gesamten Flugzeugs mit einer dem jeweiligen Anwendungsfall entsprechenden Dimensionierung ausgebildet sein.

Neben der Ausbildung als Generator kann das wenigstens eine Hilfsaggregat beispielsweise als Brennstoffpumpe, Hydraulikpumpe, Entlüfter, pneumatischer Starter oder dergleichen ausgebildet sein.

Sowohl die in den Patentansprüchen angegebenen Merkmale als auch die in den nachfolgenden Ausführungsbeispielen der erfindungsgemäßen Hilfsgerätegetriebeeinrichtung angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen der erfindungsgemäßen Hilfsgerätegetriebeeinrichtung ergeben sich aus den Patentansprüchen und den nachfolgend unter Bezugnahme auf die Zeichnung prinzipmäßig beschriebenen Ausführungsbeispielen.

Es zeigt:
- Fig. 1: eine stark schematisierte Längsschnittansicht eines Strahltriebwerkes mit einer im Wesentlichen in radialer Richtung außerhalb eines Nebenstromkanals des Strahltriebwerks angeordneten Hilfsgerätegetriebeeinrichtung, welche einen im Bereich eines Zwischengehäuses des Strahltriebwerks angeordneten Generator aufweist;
- Fig. 2: eine stark schematisierte Längsschnittansicht des Strahltriebwerks der Fig. 1 mit einer im Wesentlichen im Bereich des Zwischengehäuses des Strahltriebwerks angeordneten Hilfsgerätegetriebeeinrichtung, wobei ein Generator im Bereich einer Antriebswelle der Hilfsgerätegetriebeeinrichtung angeordnet ist;
- Fig. 3: eine der Fig. 2 entsprechende Darstellung eines Strahltriebwerks mit einer im Wesentlichen im Bereich des Zwischengehäuses des Strahltriebwerks angeordneten Hilfsgerätegetriebeeinrichtung, wobei ein Generator an einer alternativen Position der Antriebswelle der Hilfsgerätegetriebeeinrichtung angeordnet ist;
- Fig. 4: eine vereinfachte Darstellung des Generators der Fig. 2, welcher auf der Antriebswelle der Hilfsgerätegetriebeeinrichtung angeordnet ist;
- Fig. 5: eine vereinfachte Darstellung einer Weiterbildung des Generators der Fig. 4 mit einem einen Statorbereich von einem Rotorbereich trennenden Trennelement;
- Fig. 6: eine vereinfachte Schnittdarstellung eines Ausschnitts des Generators der Fig. 5 mit einem einem Gehäuse des Generators benachbarten Gehäuse, wobei eine Befestigungseinrichtung zur Festlegung des Gehäuses des Generators an dem benachbarten Gehäuse ersichtlich ist; und
- Fig. 7: eine Querschnittansicht durch einen in axialer Richtung mittleren Bereich des Generators der Fig. 5, wobei eine Teilung des Generators in Umfangsrichtung gezeigt ist.

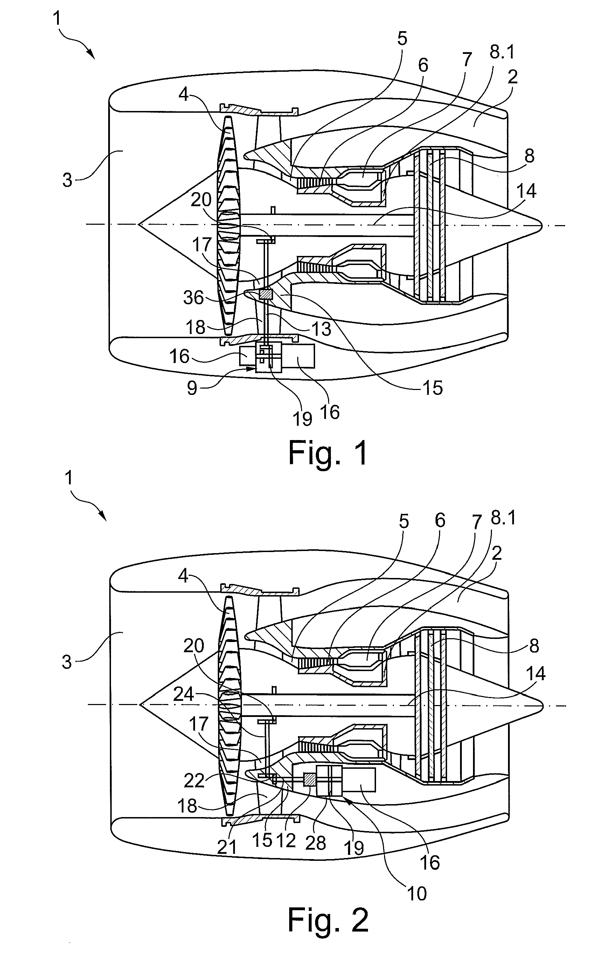

Die Fig. 1 bis 3 zeigen jeweils ein Strahltriebwerk 1, wobei zunächst der gemeinsame Aufbau der Strahltriebwerke 1 und anschließend deren Unterschiede beschrieben werden.

Das Strahltriebwerk 1 weist einen Nebenstromkanal 2 und einen Einlaufbereich 3 auf, wobei sich an den Einlaufbereich 3 stromab ein Bläser 4 in an sich bekannter Art und Weise anschließt. Wiederum stromab des Bläsers 4 teilt sich der Fluidstrom im Strahltriebwerk 1 in einen Nebenstrom und einen Kernstrom auf, wobei der Nebenstrom durch den Nebenstromkanal 2 und der Kernstrom in einen Triebwerkskern 5 strömt, der wiederum in an sich bekannter Art und Weise mit einer Verdichtereinrichtung 6, einem Brenner 7, einer zum Antrieb des Bläsers 4 vorgesehenen Niederdruckturbine 8 und einer zum Antrieb der Verdichtereinrichtung 6 vorgesehenen Hochdruckturbine 8.1 ausgeführt ist.

In den Fig. 1 bis 3 ist weiterhin jeweils eine schematisch dargestellte Hilfsgerätegetriebeeinrichtung 9, 10, 11 ersichtlich, welche sich hinsichtlich ihres Aufbaus und ihrer Anordnung voneinander unterscheiden.

Die Hilfsgerätegetriebeeinrichtung 9 der Fig. 1 ist im Wesentlichen in radialer Richtung außerhalb des Nebenstromkanals 2 angeordnet und umfasst eine Antriebswelle 13, über welche die Hilfsgerätegetriebeeinrichtung 9 mit einer zentralen Triebwerkswelle 14 verbunden ist. Die Antriebswelle 13 treibt über Zahnradpaarungen 19 Hilfsgerätegetriebewellen an, auf welchen wiederum verschiedene Hilfsaggregate 16, wie beispielsweise eine Brennstoffpumpe, eine Hydraulikpumpe, ein Entlüfter oder ein pneumatischer Starter, angeordnet sind. Die Antriebswelle 13 ist dabei in der Art eines Seitengetriebes ausgebildet.

Zur Anbindung der Antriebswelle 13 der Hilfsgerätegetriebeeinrichtung 9 an die Triebwerkswelle 14 ist vorliegend eine Kegelradverzahnung 20 vorgesehen, über welche die Antriebswelle 13 an eine Hochdruckwelle der Triebwerkswelle 14 angebunden ist, welche im Betriebszustand des Strahltriebwerks 1 mit höherer Drehzahl rotiert als eine koaxial dazu angeordnete Niederdruckwelle, an welche der Bläser 4 angebunden ist.

Die Antriebswelle 13 ist einstückig ausgebildet und verläuft durch einen so genannten inneren Strut 17, d. h. eine mit einem Hohlprofil ausgebildete Strebe, in im Wesentlichen radialer Richtung von der Triebwerkswelle 14 nach außen hin durch den Triebwerkskern 5 zu einem im Bereich eines zwischen dem Triebwerkskern 5 und dem Nebenstromkanal 2 angeordneten Zwischengehäuses 15 und von dort im Wesentlichen in radialer Richtung durch einen durch den Nebenstromkanal 2 führenden äußeren Strut 18 weiter nach außen hin zu den Hilfsgerätegetriebewellen.

Bei dem in der Fig. 2 gezeigten Ausführungsbeispiel ist die Hilfsgerätegetriebeeinrichtung 10 mit den Hilfsgerätegetriebewellen im Wesentlichen zwischen dem Nebenstromkanal 2 und dem Triebwerkskern 5 im Bereich des Zwischengehäuses 15 angeordnet.

Eine im Wesentlichen in axialer Richtung verlaufende Antriebwelle 21 der Hilfsgerätegetriebeeinrichtung 10 steht über eine Kegelradverzahnung 22 mit einer Hilfswelle 24 in Wirkverbindung. Die Hilfswelle 24 verläuft durch den inneren Strut 17 im Wesentlichen in radialer Richtung und ist an ihrem der Antriebswelle 20 abgewandten Ende mit der Triebwerkswelle 14 gekoppelt, so dass die Hilfswelle 24 eine Wirkverbindung zwischen der Triebwerkswelle 14 und der Antriebswelle 20 herstellt.

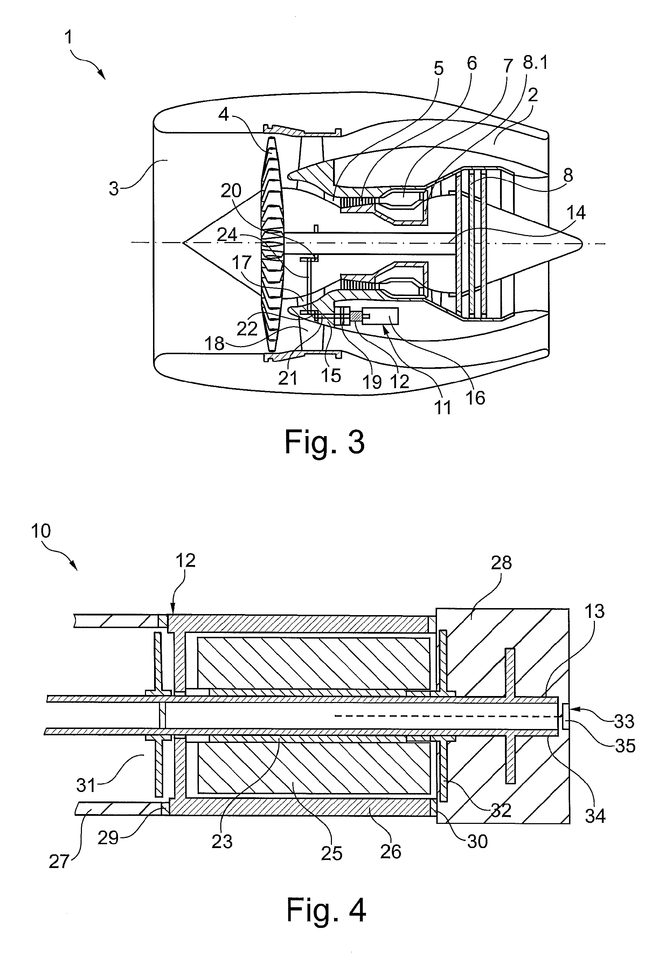

Das in der Fig. 3 gezeigte Ausführungsbeispiel entspricht im Wesentlichen dem in der Fig. 2 gezeigten Ausführungsbeispiel und unterscheidet sich von diesem lediglich in der Anordnung eines ein Hilfsaggregat darstellenden Generators 12.

Jede Hilfsgerätegetriebeeinrichtung 9, 10, 11 weist einen Generator 12 bzw. 36 auf, welcher im Prinzip auf jeder Welle der Hilfsgerätegetriebeeinrichtung 9, 10, 11 anordenbar ist. Die in den Fig. 1 bis 3 gezeigten Beispiele werden nur exemplarisch für eine Vielzahl weiterer Anordnungsmöglichkeiten der Generatoren 12 bzw. 36 beschrieben.

Bei sämtlichen in den Fig. 1 bis 3 gezeigten Ausführungen der Hilfsgerätegetriebeeinrichtungen 9, 10, 11 ist der Generator 12, 36 in radialer Richtung zwischen dem Nebenstromkanal 2 und dem Triebwerkskern 5 im Bereich des Zwischengehäuses 15 angeordnet, wobei der Generator 12, 36 alternativ hierzu beispielsweise auch in radialer Richtung außerhalb des Nebenstromkanals 2 oder im Bereich der Struts 17, 18 angeordnet sein kann.

In dem in der Fig. 1 gezeigten Ausführungsbeispiel ist der Generator 36 auf der in radialer Richtung zu der Triebwerkswelle 14 verlaufenden Antriebswelle 13 der Hilfsgerätegetriebeeinrichtung 9 im Bereich des Zwischengehäuses 15 angeordnet.

Sowohl bei dem in der Fig. 2 gezeigten als auch bei dem in der Fig. 3 gezeigten Ausführungsbeispiel ist der Generator 12 jeweils auf der im Wesentlichen in axialer Richtung verlaufenden Antriebswelle 21 angeordnet, wobei der Generator 12 bei dem in der Fig. 2 gezeigten Ausführungsbeispiel im Kraftfluss von der Triebwerkswelle 14 aus gesehen vor den Hilfsgerätegetriebewellen und bei dem in der Fig. 3 gezeigten Ausführungsbeispiel nach den Hilfsgerätegetriebewellen angeordnet ist. Die Anordnung des Generators 12 im Kraftfluss vor den Hilfsgerätegetriebewellen hat den Vorteil, dass dadurch, dass der Generator 12 ein großer Leistungsabnehmer sein kann, die darauf folgenden Hilfsgerätegetriebewellen, durch welche keine großen Leistungen geführt werden müssen, klein dimensioniert werden können.

In der Fig. 4 ist der Generator 12, welcher auf der Antriebswelle 21 der Hilfsgerätegetriebeeinrichtung 10 angeordnet ist, näher ersichtlich. Der Generator 12 weist einen Rotor 23 und einen Stator 25 auf, wobei der Stator 25 fest mit einem Gehäuse 26 des Generators 12 verbunden ist. Der Generator 12 ist in axialer Richtung der Antriebswelle 21 in einer Aussparung eines Gehäuses 27 der Antriebswelle 21 zwischen dem Gehäuse 27 der Antriebswelle 21 und einem Gehäuse 28 der Hilfsgerätegetriebeeinrichtung 10 angeordnet, wobei das Gehäuse 26 des Generators 12 sowohl in einem Anlagebereich zu dem Gehäuse 27 der Antriebswelle 21 als auch in einem Anlagebereich zu dem Gehäuse 28 der Hilfsgerätegetriebeeinrichtung 10 jeweils eine Dichtfläche 29 bzw. 30 aufweist.

Um den vorliegend in einem Trockenraum angeordneten Stator 24 und den ebenfalls in einem Trockenraum angeordneten Rotor 23 gegenüber den benachbarten Gehäusen 27 bzw. 28 abzudichten, ist beidseits des Generators 12 im Bereich der Antriebswelle 21 jeweils ein Ölabscheider 30 bzw. 31 vorgesehen.

Zur Kühlung des sich in einem Betrieb des Strahltriebwerks 1 erhitzenden Stators 25 ist die Antriebswelle 21 vorliegend als Hohlwelle ausgebildet, wobei in einem Endbereich 34 der Antriebswelle 21 eine Kühleinrichtung 33 mit einer Öldüse angeordnet ist, mittels welcher Wärme von dem Generator 12 über eine Zirkulation von Öl in der Hohlwelle 21 abgeführt werden kann.

Um den Generator 12 einfach auf der Antriebswelle 21 festlegen und von dieser lösen zu können, sind der Stator 25 und das Gehäuse 26 des Generators 12 in Umfangsrichtung geteilt, und vorliegend zweiteilig bzw. zweischalig ausgebildet.

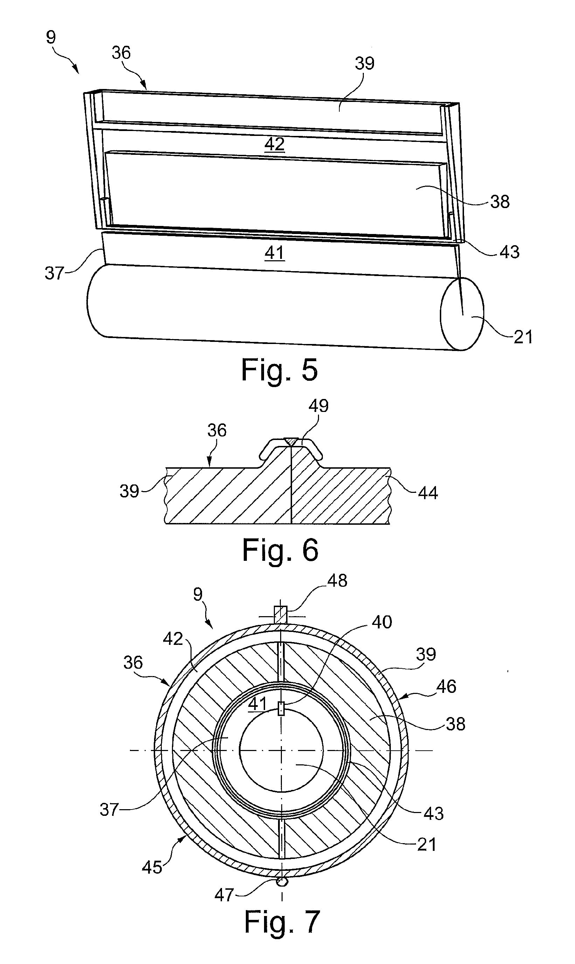

Die genaue Ausführung der Teilung des Generators 12 ist in der Fig. 4 nicht näher ersichtlich, ist aber im Wesentlichen vergleichbar zu dem in den Fig. 5 bis 7 gezeigten, alternativ ausgeführten Generator 36 ausgebildet, welcher nachfolgend stellvertretend für den Generator 12 beschrieben wird.

Der in der Fig. 5 näher ersichtliche Generator 36 ist ebenfalls mit einem Rotor 37, einem Stator 38 und einem Gehäuse 39 ausgebildet, wobei der Rotor 37 über eine in der Fig. 7 näher ersichtliche Festlegungseinrichtung 40, welche vorliegend als Nut-Feder-Verbindung ausgebildet ist, auf der Antriebswelle 13 der Hilfsgerätegetriebeeinrichtung 9 drehfest festgelegt ist, so dass der Rotor 37 bei einer Drehbewegung der Antriebswelle 13 von dieser mitgedreht wird.

Im Unterschied zu dem Generator 12 ist bei dem Generator 36 zwischen einem den Rotor 37 aufnehmenden Rotorbereich 41 und einem den Stator 38 aufnehmenden Statorbereich 42 ein eine Gehäuseeinrichtung darstellendes Trennelement 43 angeordnet, welches den Stator 38 zusammen mit dem Gehäuse 39 des Generators 36 gegenüber dem Rotor 37 kapselt. Das Trennelement 43 ist aus einem nicht-magnetischen Material ausgebildet, so dass die Funktionsfähigkeit des Generators 36 durch das Trennelement 43 nicht beeinträchtigt wird.

In der gezeigten Ausführung ist das Trennelement 43 über nicht näher ersichtliche und beispielsweise als Schrauben, Bolzen oder dergleichen ausgebildete Befestigungselemente mit einem dem Gehäuse 39 des Generators 36 benachbarten Gehäuse 44 der Antriebswelle 13 verbunden.

Da das Trennelement 43 kein Strukturbauteil darstellt, kann eine sich in radialer Richtung erstreckende Dicke des Trennelements 43 in Abhängigkeit von dem gewählten Material des Trennelements 43 sehr klein gehalten werden, so dass ein Spalt zwischen dem Rotor 37 und dem Stator 38 sehr gering ist und durch das Trennelement 43 nur geringe Verluste verursacht werden.

Der Generator 36 weist eine nicht näher ersichtliche Kühleinrichtung auf, welche den hier einen Nassbereich darstellenden Rotorbereich 41 mit einem Kühlmittel, insbesondere Öl, versorgt. Durch das Kühlmittel wird im Betrieb des Strahltriebwerks 1 im Bereich des Stators 38 entstehende Wärmeenergie von diesem abgeführt. Da das Kühlmittel sehr nah an den einen Trockenraum darstellenden Statorbereich 42 heranreicht, ist die Energieaufnahme durch das Kühlmittel sehr effektiv. Zusätzlich wird durch das entsprechend ausgebildete Kühlmittel eine Korrosion des Rotors 37 vorteilhafterweise verlangsamt bzw. unterbunden.

Um den Generator 36 auf einfache Weise beispielsweise zu Wartungs- oder Reparaturarbeiten von der Antriebswelle 13 entfernen zu können, ist das Gehäuse 39 des Generators 36 und der Stator 38 in Umfangsrichtung vorliegend zweigeteilt bzw. zweischalig ausgebildet, wobei die beiden Teile 45, 46 einerseits eine mit einem Scharnier 47 ausgebildete Gelenkverbindung und andererseits eine Verschlusseinrichtung 48 aufweisen. Im Bereich der Verschlusseinrichtung 48 weisen beide Bauteile 45, 46 des Generators 36 jeweils einen Flansch auf, über welchen die Bauteile 45, 46 des Generators 36 beispielsweise über als Schrauben ausgebildete Befestigungselemente aneinander festgelegt oder voneinander gelöst werden können und die lösbaren Bauteile 45, 46 des Generators 36 entsprechend auf der Antriebswelle 13 festgelegt bzw. von dieser gelöst werden können.

Das Trennelement 43 und gegebenenfalls der Rotor 37, welche im Unterschied beispielsweise zu dem Stator 38 des Generators 36 nicht sehr fehleranfällig sind, sind vorliegend nicht von der Antriebswelle 13 lösbar. Bei einer alternativen Ausführung der Erfindung können diese ebenfalls in Umfangsrichtung geteilt, Bestandteil der beiden Bauteile 45, 46 des Generators 36 und somit lösbar von der Antriebswelle 13 sein.

Im Bereich der Verschlusseinrichtung 34 und der Gelenkverbindung können Dichtelemente vorgesehen sein.

Um eine feste Anbindung des Generators 36 an die Antriebswelle 13 zu schaffen, kann alternativ oder zusätzlich zu der manschettenartigen Gelenk- und Verschlusseinrichtung 47, 48 in einem in axialer Richtung an das Gehäuse 44 der Antriebswelle 13 grenzenden Bereich des Gehäuses 39 des Generators 36 eine in der Fig. 6 ersichtliche und vereinfacht dargestellte Befestigungseinrichtung 49 vorgesehen sein, welche insbesondere als ein Schnellverschluss in Form einer so genannten V-Band-Schelle ausgebildet ist. Eine derartige Befestigungseinrichtung 49 kann in beiden axialen Randbereichen des Generators 36 zur Festlegung an dem Gehäuse 44 der Antriebswelle 13 vorgesehen sein, wobei das Gehäuse 39 des Generators 36 über die Befestigungseinrichtung 49 auch in axialer Richtung gesichert wird.

Um eine Verdrehung des Gehäuses 44 der Antriebswelle 13 gegenüber dem Gehäuse 39 des Generators 36 insbesondere im Betrieb des Triebwerks 1 zu verhindern, kann beispielsweise ein Pin, ein Bolzen oder dergleichen vorgesehen sein, welcher im Bereich von aneinander grenzenden Flanschen der Gehäuse 39, 44 im Bereich der V-Band-Schelle 49 in axialer Richtung in den Flanschen angeordnet sein kann.

Bei einer alternativen Anordnung des Generators auf einer Welle kann die Befestigungseinrichtung zur Festlegung des Gehäuses des Generators an einem im jeweiligen Anwendungsfall an das Gehäuse des Generators grenzenden Bauteil vorgesehen sein.

### Bezugszeichenliste

- 1: Strahltriebwerk
- 2: Nebenstromkanal
- 3: Einlaufbereich
- 4: Bläser
- 5: Triebwerkskern
- 6: Verdichtereinrichtung
- 7: Brenner
- 8: Niederdruckturbine
- 8.1: Hochdruckturbine
- 9, 10, 11: Hilfsgerätegetriebeeinrichtung
- 12: Generator
- 13: Antriebswelle
- 14: Triebwerkswelle
- 15: Zwischengehäuse
- 16: Hilfsaggregat
- 17: innerer Strut
- 18: äußerer Strut
- 19: Zahnradpaarung
- 20: Kegelradverzahnung
- 21: Antriebswelle
- 22: Kegelradverzahnung
- 23: Rotor
- 24: Hilfswelle
- 25: Stator
- 26: Gehäuse des Generators
- 27: Gehäuse der Antriebswelle
- 28: Gehäuse der Hilfsgerätegetriebeeinrichtung
- 29, 30: Dichtfläche
- 31, 32: Ölabscheider
- 33: Kühleinrichtung
- 34: Endbereich der Antriebswelle
- 35: Öldüse
- 36: Generator
- 37: Rotor
- 38: Stator
- 39: Gehäuse des Generators
- 40: Festlegungseinrichtung
- 41: Rotorbereich
- 42: Statorbereich
- 43: Trennelement
- 44: Gehäuse der Antriebswelle
- 45, 46: Bauteile des Generators
- 47: Scharnier
- 48: Verschlusseinrichtung
- 49: Befestigungseinrichtung

## Patentansprüche

1. Hilfsgerätegetriebeeinrichtung für ein Triebwerk (1) mit wenigstens einer mit einem Hilfsaggregat verbindbaren und von einer Antriebswelle (13, 21) antreibbaren Hilfsgerätegetriebewelle, wobei die Antriebswelle (13, 21) mit einer Triebwerkswelle (14) des Triebwerks (1) in Wirkverbindung bringbar ist, **dadurch gekennzeichnet, dass** wenigstens ein Hilfsaggregat (12, 36) auf der Antriebswelle (13, 21) und/oder im Bereich der Wirkverbindung zwischen der Antriebswelle (13, 21) und der Triebwerkswelle (14) und/oder auf einer mit einem weiteren Hilfsaggregat verbindbaren Hilfsgerätegetriebewelle anordenbar ist.

2. Hilfsgerätegetriebeeinrichtung nach Anspruch 1, **dadurch gekennzeichnet, dass** das wenigstens eine Hilfsaggregat vorzugsweise als Generator (12, 36) ausführbar ist und zumindest teilweise lösbar auf der Antriebswelle (13, 21), im Bereich der Wirkverbindung zwischen der Antriebswelle (13, 21) und der Triebwerkswelle (14) oder der Hilfsgerätegetriebewelle anordenbar ist.

3. Hilfsgerätegetriebeeinrichtung nach Anspruch 2, **dadurch gekennzeichnet, dass** wenigstens ein Stator (25, 38) und ein Gehäuse (26, 39) des vorzugsweise als Generator (12, 36) ausgeführten Hilfsaggregates lösbar auf der Antriebswelle (13, 21), im Bereich der Wirkverbindung zwischen der Antriebswelle (13, 21) und der Triebwerkswelle (14) oder der Hilfsgerätegetriebewelle anordenbar ist und ein Rotor (23, 37) fest mit einer Welle (13, 21, 24) verbunden ist.

4. Hilfsgerätegetriebeeinrichtung nach Anspruch 3, **dadurch gekennzeichnet, dass** der Rotor (23, 37) über eine insbesondere als Nut-Federverbindung ausgebildete Festlegungseinrichtung (40) mit einer Welle (13, 21, 24) verbindbar ist.

5. Hilfsgerätegetriebeeinrichtung nach einem der Ansprüche 3 oder 4, **dadurch gekennzeichnet, dass** von einer Welle (13, 21, 24) lösbare Bauteile (45, 46) des Generators (12, 36) in Umfangsrichtung wenigstens zweiteilig ausgebildet sind.

6. Hilfsgerätegetriebeeinrichtung nach Anspruch 5, **dadurch gekennzeichnet, dass** die lösbaren Bauteile (45, 46) des Generators (12, 36) einerseits mit einer Gelenkverbindung (47) miteinander schwenkbar gekoppelt sind und andererseits über eine Verschlusseinrichtung (48) miteinander verbindbar sind.

7. Hilfsgerätegetriebeeinrichtung nach einem der Ansprüche 5 oder 6, **dadurch gekennzeichnet, dass** die lösbaren Bauteile (45, 46) des Generators (12, 36) mittels wenigstens einer den Generator (12, 36) umfangsseitig umfassenden Befestigungseinrichtung (49) auf der Welle (13, 21, 24) anordenbar sind.

8. Hilfsgerätegetriebeeinrichtung nach Anspruch 7, **dadurch gekennzeichnet, dass** die Befestigungseinrichtung (49) zum Zusammenwirken mit einem in axialer Richtung seitlichen Bereich des Gehäuses (26, 39) des Generators (12, 36) und einem an diesen Bereich des Gehäuses (26, 39) angrenzenden Bereich eines benachbarten Gehäuses (27, 28, 44) vorgesehen ist.

9. Hilfsgerätegetriebeeinrichtung nach einem der Ansprüche 1 bis 8, **dadurch gekennzeichnet, dass** die Welle (13, 21, 24), auf der der Generator (12, 36) anordenbar ist, als Hohlwelle ausgebildet ist und eine Kühleinrichtung (33) mit einem Kühlmittel vorgesehen ist, welches zur Kühlung des Generators (12, 36) durch die Welle (13, 21, 24) führbar ist.

10. Hilfsgerätegetriebeeinrichtung nach einem der Ansprüche 2 bis 8, **dadurch gekennzeichnet, dass** der Generator ein separates Kühlsystem aufweist.

11. Hilfsgerätegetriebeeinrichtung nach einem der Ansprüche 2 bis 10, **dadurch gekennzeichnet, dass** ein wenigstens einen Stator (25, 38) aufweisender Statorbereich (42) des Generators (12, 36) gegenüber einem wenigstens einen Rotor (23, 37) aufweisenden Rotorbereich (41) des Generators (12, 36) getrennt ist.

12. Hilfsgerätegetriebeeinrichtung nach Anspruch 11, **dadurch gekennzeichnet, dass** zur Trennung des Statorbereichs (42) von dem Rotorbereich (41) ein zwischen Stator (25, 38) und Rotor (23, 37) verlaufendes Trennelement (43) vorgesehen ist.

13. Hilfsgerätegetriebeeinrichtung nach Anspruch 12, **dadurch gekennzeichnet, dass** das Trennelement (43) aus einem nicht-magnetischen Material besteht.

14. Hilfsgerätegetriebeeinrichtung nach einem der Ansprüche 12 oder 13, **dadurch gekennzeichnet, dass** das Trennelement (43) integral mit einem Gehäuse (26, 39) des Generators (12, 36) gebildet ist.

15. Hilfsgerätegetriebeeinrichtung nach einem der Ansprüche 12 oder 13, **dadurch gekennzeichnet, dass** das Trennelement (43) als separates Bauteil ausgebildet ist, welches über Befestigungselemente mit einem Gehäuse (26, 39) des Generators (12, 36) verbindbar ist.
